# DEMANDE DE BREVET EUROPEEN

(11) **EP 0 786 494 A2**
(43) Date de publication de la demande: **30.07.1997**
(21) Numéro de dépôt: 96402765.0
(22) Date de dépôt: 17.12.1996
(51) Int. Cl.: C08L 33/12

(54) **Articles faconnés présentant une résistance améliorée aux agents fissurants**

(30) Priorité: 28.12.1995 FR 9515631
(71) Demandeur: ATOHAAS HOLDING C.V., 2034 MB Haarlem (NL)
(72) Inventeur: Tordieman, Philippe, 64140 Billere (FR); Heim, Philippe, 64000 Pau (FR)
(74) Mandataire: Luziau, Nelly

(57) **Abrégé**

Des articles façonnés par exemple par coulée, injection ou extrusion et présentant une résistance améliorée aux agents fissurants, sont formés à partir d'une composition méthacrylique thermoplastique comprenant au moins un (co)polymère thermoplastique (A) à base majoritaire de méthacrylate de méthyle et au moins un (co)polymère réticulé (B) à base majoritaire de méthacrylate de méthyle obtenu par polymérisation en émulsion en présence d'au moins un agent de réticulation et d'au moins un agent de greffage.

## Description

La présente invention concerne des articles façonnés obtenus à partir de résines thermoplastiques rigides de type méthacrylique et présentant une résistance améliorée aux agents fissurants.

Les applications des résines thermoplastiques méthacryliques, telles que le poly(méthacrylate de méthyle) et de nombreux copolymères de méthacrylate de méthyle sont bien connues : façonnage par coulée ou par extrusion de produits en feuilles ou plaques (matériaux de vitrage, installations d'éclairage, enseignes et appareils de publicité lumineuse), par injection ou par extrusion d'articles divers, tels que des articles sanitaires (baignoires), vaisselle, pièces pour l'industrie automobile, etc.

Pour ces applications, les résines thermoplastiques rigides sont employées en raison de leurs excellentes propriétés, telles que transparence, propriétés mécaniques et aptitude au moulage. Cependant, lorsque des articles façonnés à partir de ces résines sont en contact avec certains agents, appelés "agents fissurants", comme des solvants organiques ou des diluants pour peinture, ils se fissurent ou se fendillent, de sorte que leur aspect se détériore et que leurs propriétés mécaniques sont diminuées.

Par "agents fissurants", on entend des solvants classiques pour nettoyer la surface d'articles en (co)polymère du méthacrylate de méthyle ou tout produit susceptible d'entrer en contact avec la surface de ces produits lors de leur manipulation ou utilisation.

Le document EP-A-0453198 (Sumitomo Chemical Company Ltd) décrit une composition de résine méthacrylique qui présente de bonnes propriétés mécaniques, résistance à la distorsion à la chaleur et aux solvants (isopropanol). Cette composition comprend 20 à 99 % en poids d'une résine méthacrylique servant de matrice et 1 à 80 % en poids d'additif constitué par un polymère méthacrylique à structure bi-couche formée d'une couche interne (coeur) de polymère méthacrylique réticulé par un monomère polyfonctionnel (par exemple diméthacrylate d'éthylène glycol ou méthacrylate d'allyle) et une couche externe (coquille) de polymère méthacrylique, ce polymère bicouche se présentant sous forme de particule dont la dimension moyenne est de 200 à 5 000 A° (20 à 500 nm).

On peut noter que, pour les faibles pourcentages d'additif, la résistance au solvant (isopropanol) est faible.

L'utilisation de quantité plus importante permet d'améliorer la résistance au solvant. Cependant, ceci entraîne notamment une augmentation du coût, peu compatible avec les intérêts d'une production. En outre, la présence de quantité importante d'additif peut diminuer la transparence du produit final.

Dans le document EP-A-0571918 (Sumitomo Chemical Company Ltd), il est mentionné que, lorsque le polymère méthacrylique constituant le coeur est réticulé, la résistance au solvant peut être détériorée, même pour des teneurs plus élevées en additif (voir exemple comparatif C₃). Il est donc proposé de combiner une résine de méthacrylate avec un polymère méthacrylique bicouche, comprenant un coeur non réticulé, essentiellement à base d'unités de méthacrylate de méthyle et ayant une masse moléculaire moyenne, mesurée à l'aide d'un viscosimètre (équivalente à la masse moléculaire moyenne en poids) de 500 000 à 5 000 000 et une coquille essentiellement à base d'unités de méthacrylate de méthyle et ayant une masse moléculaire moyenne de 50 000 à 300 000 (mesurée à l'aide d'un viscosimètre).

La Société déposante a maintenant découvert que, contrairement à cet enseignement, la résistance aux solvants (ou agents fissurants) d'articles façonnés à partir de résines de type méthacrylique est nettement améliorée si ces résines comprennent une phase polymère réticulé, dans certaines conditions.

La présente invention a donc pour objet des articles façonnés présentant une résistance améliorée aux agents fissurants obtenus à partir d'une composition thermoplastique comprenant :
a) 50 à 99,9 % en poids d'au moins un (co)polymère thermoplastique rigide (A) à base majoritaire de méthacrylate de méthyle et, éventuellement, d'au moins un monomère à insaturation éthylénique copolymérisable avec le méthacrylate de méthyle, et
b) 50 à 0,1 % en poids d'au moins un (co)polymère réticulé (B) obtenu par polymérisation en émulsion d'une quantité majoritaire de méthacrylate de méthyle et, éventuellement, d'au moins un monomère à insaturation éthylénique copolymérisable avec le méthacrylate de méthyle, et en présence d'au moins un agent de réticulation et d'au moins un agent de greffage,
et/ou d'au moins un polymère méthacrylique bicouche (B') constitué par ledit (co)polymère réticulé (B) associé à un (co)polymère non réticulé (C) à base majoritaire de méthacrylate de méthyle et, éventuellement, d'au moins un monomère à insaturation éthylénique copolymérisable avec le méthacrylate de méthyle, ce (co)polymère non réticulé (C) étant polymérisé en présence du (co)polymère réticulé (B).

Le rapport en poids du (co)polymère réticulé (B) au (co)polymère non réticulé (C) est généralement compris entre 100:0 et 20:80, de préférence entre 100:0 et 50:50 et particulièrement, entre 100:0 et 60:40.

En particulier, la composition de l'invention comprend, en poids, de 50 à dans une extrudeuse ou un appareillage de moulage par injection.

Il est aussi possible de préparer directement la composition selon l'invention sans passer par l'étape de récupération des particules de l'élément (B) ou (B') par pulvérisation, par exemple, du latex. Pour cela, on peut utiliser le procédé décrit dans le document EP-B1-305272. Ainsi, on prépare l'élément (B) ou (B') sous forme de latex aqueux comme indiqué précédemment, puis on lui ajoute le ou les monomère(s) nécessaire(s) à la formation du polymère thermoplastique rigide A servant de matrice, puis un floculant du latex, par exemple un sel d'ammonium quaternaire à longue chaîne, de manière à transférer les particules du latex directement dans le ou les monomère(s) devant former la matrice de polymère thermoplastique rigide A. Cette dernière est alors formée par polymérisation en suspension du mélange de monomère(s) et des particules de latex.

L'invention porte sur les produits finis façonnés, par exemple, par coulée, extrusion, injection, pour obtenir des produits en feuilles ou des produits moulés de formes variées.

Lorsque la composition thermoplastique contient un (co)polymère réticulé (B) non associé à un (co)polymère non réticulé (C), elle est utilisée, de préférence, pour former des plaques coulées.

On peut naturellement incorporer dans les polymères (B) ou (B') de l'invention et les matrices A renforcées par de tels polymères, un certain nombre d'additifs usuels, selon des techniques bien connues des spécialistes, dans des proportions qui sont couramment utilisées, par exemple des stabilisants empêchant une dégradation par oxydation, par la chaleur et par la lumière ultraviolette.

Les stabilisants peuvent être introduits à une étape quelconque du procédé de polymérisation conduisant à la formation de la matière polymère (B) ou (B') et/ou de la matrice (A), jusqu'au dernier stade de façonnage du produit final. On préfère, cependant, incorporer les stabilisants au cours des polymérisations ou dans les latex des polymères résultant de la polymérisation.

Les stabilisants vis-à-vis de la dégradation par oxydation ou par la chaleur, qui peuvent être utilisés ici, comprennent par exemple des phénols ayant un empêchement stérique, des hydroquinones, des phosphites, leurs dérivés et leurs mélanges. Les stabilisants vis-à-vis de la lumière ultraviolette peuvent être, par exemple, des résorcinols substitués, salicylates, benzotriazoles, benzophénones et leurs mélanges.

D'autres substances pouvant être incorporées dans les matières polymères (B) ou (B') et matrices thermoplastiques (A) de la présente invention 0,1 %, notamment de 30 à 1 % et, avantageusement de 0,5 à 10% de (B) ou (B').

Le ou les comonomères à insaturation éthylénique copolymérisables avec le méthacrylate de méthyle sont notamment choisis parmi les acrylates d'alkyle en C₁-C₈ (comme l'acrylate de n-butyle, d'éthyle, de 2-éthylhexyle et d'isobutyle), le styrène, les styrènes substitués (comme l'α-méthylstyrène, le monochlorostyrène et le tert.-butylstyrène), l'acrylonitrile, le méthacrylonitrile, les méthacrylates d'alkyle en C₂-C₈ (comme le méthacrylate d'isopropyle, de butyle secondaire, de tertiobutyle), les acrylates et méthacrylates d'hydroxyalkyle inférieur, les acrylates d'alcoxy inférieur, l'acrylate de cyanéthyle, l'acrylamide, l'acide acrylique et l'acide méthacrylique, les maléimides.

Le polymère formant la matrice thermoplastique rigide (A) est avantageusement constitué par de l'homopolymère de méthacrylate de méthyle (PMMA). Il peut être aussi un (co)polymère méthacrylique, tel que défini précédemment. Ces (co)polymères peuvent aussi être associés à un additif choc usuel (par exemple un élastomère acrylique) ; ils présentent alors des propriétés de résistance au choc. Ce peut être aussi du PMMA à teneur élevée en triades syndiotactiques conférant au polymère des propriétés de tenue à la chaleur, ayant, par exemple, au moins 70% de triades syndiotactiques.

Le polymère thermoplastique (A), lorsqu'il se présente sous forme d'un copolymère, dérive de la polymérisation d'au moins 75 % en poids et de préférence d'au moins 80 % de méthacrylate de méthyle, le reste étant constitué par au moins un monomère à insaturation éthylénique tel que décrit précédemment.

La composition devant former les (co)polymères réticulés (B) comprend avantageusement de 50 % à 100 % en poids, de préférence de 70 % à 100 % de méthacrylate de méthyle et de 0 à 50 % en poids et, de préférence, de 0 à 30 % d'au moins un autre monomère copolymérisable à insaturation éthylénique tel que défini précédemment.

La composition devant former le (co)polymère réticulé comprend de 0,1 à 10 % en poids, de préférence de 0,1 à 5 % en poids, par rapport à la totalité des monomères méthacrylate de méthyle et comonomère(s) à insaturation éthylénique, d'au moins un monomère de réticulation.

Le ou les monomères de réticulation entrant dans la constitution du polymère réticulé (B) sont des monomères polyfonctionnels ayant au moins deux doubles liaisons éthyléniques. Ils sont notamment choisis parmi les polyméthacrylates et polyacrylates de polyols, comme les diméthacrylates d'alkylène-glycol, tels que le diméthacrylate d'éthylène-glycol, le diméthacrylate de 1,3-butylène-glycol, le diméthacrylate de 1,4-butylène-glycol et le diméthacrylate de propylène-glycol, les diacrylates d'alkylène-glycol, tels que le diacrylate d'éthylène-glycol, le diacrylate de 1,3- ou de 1,4-butylène-glycol, et le triméthacrylate de triméthylolpropane ; les polyvinylbenzènes, tels que le divinyl benzène ou le trivinylbenzène ; l'acrylate et le méthacrylate de vinyle.

La composition permettant la formation du (co)polymère réticulé (B) contient, en outre, au moins un monomère de greffage qui laisse, après la polymérisation, des insaturations éthyléniques qui permettent le greffage soit du (co)polymère formé à l'étape ultérieure, c'est-à-dire le (co)polymère non réticulé (C) constituant la couche externe ou "coquille" de (B), soit du (co)polymère formant la matrice thermoplastique rigide (A). Généralement, le(s) monomère(s) de greffage représente(nt) de 0,1 à 10 % en poids, en particulier de 0,5 à 5 % en poids de la totalité des monomères méthacrylate de méthyle et comonomères à insaturation éthylénique.

Le ou les monomères de greffage sont des monomères polyfonctionnels ayant au moins deux doubles liaisons éthyléniques dont au moins une n'est pas acrylique ou méthacrylique. Ils sont choisis notamment parmi les esters copolymérisables d'allyle, de méthallyle ou de crotyle d'acides ou diacides carboxyliques à insaturation, α, β, comme les esters allylique, méthallylique et crotylique de l'acide acrylique, de l'acide méthacrylique, de l'acide maléique (mono- et di-esters), comme le maléate de diallyle, de l'acide fumarique (mono- et di-esters) et de l'acide itaconique (mono- et di-esters) ; l'éther d'allyle et de vinyle, l'éther de méthallyle et de vinyle et l'éther de crotyle et de vinyle ; le thioéther d'allyle et de vinyle, le thioéther de méthallyle et de vinyle et le thioéther de crotyle et de vinyle ; le N-allyl-, le méthallyl- ou le crotyl-maléimide ; les esters vinyliques de l'acide 3-buténoïque et de l'acide 4-penténoïque ; le cyanurate de triallyle ; les esters cycloalcényliques de l'acide acrylique, de l'acide méthacrylique, de l'acide maléique (mono- et di-esters), de l'acide fumarique (mono- et di-esters), de l'acide itaconique (mono- et di-esters), tels que l'acrylate de 2-, 3- ou 4-cyclohexényle ; les esters bicyclo-(2,2,1)-hept-5-ène-2-yliques de l'acide acrylique, de l'acide méthacrylique, de l'acide maléique (mono- et di-esters), de l'acide fumarique (mono- et di-esters) et de l'acide itaconique (mono-et di-esters) ; les éthers vinyliques et les thio-éthers vinyliques des cycloalcénols et des cycloalcène-thiols, tels que l'éther de vinyle et de cyclohex-4-ène-1-yle, l'éther vinylique de bicyclo-(2,2,1)-hept-5-ène-2-ol ; et les esters vinyliques des acides cycloalcène-carboxyliques, tels que l'acide vinylcyclohex-3-ène-1-carboxylique et le bicyclo-(2,2,1)-hept-5-ène-2-carboxylate de vinyle.

Lorsque, selon un mode de réalisation de l'invention, le (co)polymère réticulé (B), constituant alors un premier stade (ou coeur) est associé à un (co)polymère non réticulé (C), polymérisé en présence dudit (co)polymère réticulé (B) et constituant un deuxième stade (ou coquille), la composition devant former ce deuxième stade ou coquille comprend de 75 % à 100 %, de préférence de 80 à 100 % en poids de monomère méthacrylate de méthyle et de 0 à 25 %, de préférence de 0 à 20 % en poids d'au moins un monomère à insaturation éthylénique copolymérisable avec le méthacrylate de méthyle tel que décrit précédemment ; elle peut comprendre, en outre, au moins un agent de transfert (ou agent limitateur) de chaîne, introduit dans une quantité allant jusqu'à 5 % en poids, notamment jusqu'à 1% en poids, par rapport aux monomères (méthacrylate de méthyle et comonomères) utilisés pour la polymérisation de cette coquille. Ces agents de transfert sont notamment choisis parmi les mercaptans, les polymercaptans, les composés polyhalogénés, les monoterpènes di-insaturés, les diterpènes mono-insaturés et l'acide thioglycolique. On peut mentionner, plus particulièrement, le tertiododécylmercaptan, le sec.-butylmercaptan, le n-dodécylmercaptan et le terpinolène.

La masse moléculaire moyenne en poids du (co)polymère réticulé (B) n'est pas mesurable puisqu'il est réticulé et est formé de chaînes de masses moléculaires élevées liées entre elles ; celle du (co)polymère (C) constituant la coquille du (co)polymère (B), lorsqu'elle existe, est comprise entre 20 000 et 300 000, notamment entre 20 000 et 200 000.

Le (co)polymère réticulé (B) est préparé de façon connue en soi, par polymérisation en émulsion, dans un milieu aqueux, en présence d'un initiateur engendrant des radicaux libres et d'un agent émulsifiant. On l'obtient sous forme de latex.

Le diamètre moyen des particules (B) ou (B') à l'état de latex est compris de préférence entre 50 nm et 1000 nm.

L'élément (B'), formé du premier stade B (coeur) et du deuxième stade C (coquille) est obtenu de façon classique par une première étape consistant à former le polymère réticulé du premier stade comme mentionné précédemment, puis une deuxième étape consistant à ajouter le ou les monomères correspondant au polymère du deuxième stade et à le (co)polymériser pour obtenir celui-ci, cette deuxième étape de polymérisation étant effectuée en émulsion comme pour le polymère réticulé. Le produit obtenu à l'issue de ces deux étapes se présente sous forme de latex.

La proportion d'émulsifiant est, de préférence, comprise entre 0,01 et 5 % en poids, notamment comprise entre 0,1 et 3 % en poids, sur la base du poids total des monomères polymérisables chargés à chacun des stades, c'est-à-dire méthacrylate de méthyle, comonomères, monomère(s) de réticulation et de greffage.

Parmi les agents émulsifiants, on peut citer les savons usuels, les alkyl benzène-sulfonates tels que le dodécyl-benzène-sulfonate de sodium, les alkylphénoxy-polyéthylène-sulfonates alcalins, les alkylsulfates de sodium comme le lauryl-sulfate de sodium, les sels d'amines à longues chaînes, des sels d'acides carboxyliques ou sulfoniques à longues chaînes comme les sels d'acide laurique.

Le milieu de polymérisation, pour la préparation des (co)polymères (B) et (C), contient une quantité efficace d'un initiateur convenable de polymérisation engendrant des radicaux libres, qui est activé soit par la chaleur, soit par une réaction d'oxydo-réduction (rédox). Les initiateurs préférés sont ceux qui sont solubles dans l'eau et activés thermiquement, par exemple des persulfates, comme le persulfate de potassium (K₂S₂O₈),des peroxydes, des hydroperoxydes et des composés diazoïques.

La quantité d'initiateur de radicaux libres varie en fonction des monomères, de la température et du mode d'addition, mais, en règle générale, la quantité d'initiateur varie d'environ 0,01 à 3 % en poids dans chaque stade de polymérisation sur la base du poids total de la charge des monomères.

Chaque polymérisation peut être conduite à des températures comprises entre 0 et 125°C, la gamme préférée allant de 30 à 95°C.

On peut isoler l'élément (B) ou (B') selon l'invention sous forme de poudre, à partir du latex le contenant, par toute technique connue de l'homme de l'art, par exemple, par coagulation ou par séchage par pulvérisation ou atomisation.

On peut former la composition selon l'invention qui comprend l'élément (B) ou (B') et la "matrice" thermoplastique rigide (A) par n'importe quel procédé connu. On peut ainsi mélanger les deux composants se présentant tous deux sous la forme d'une poudre, afin de préparer une composition de moulage. On peut aussi effectuer le mélange en mettant le (co)polymère formant l'élément (B) ou (B') en suspension dans le mélange des monomères ou dans le sirop de prépolymère devant conduire à la matrice thermoplastique rigide (A). L'élément (B) ou (B') et le polymère formant la matrice thermoplastique rigide (A) peuvent être mélangés tous deux à l'état d'émulsion, de suspension ou de solution dans un système aqueux ou non aqueux, les particules étant isolées de l'eau ou du composé organique par coagulation, séchage par pulvérisation ou par des moyens connus de séparation et on peut ensuite les traiter avec ou sans l'étape intermédiaire de séchage. Les masses coulées que l'on peut obtenir peuvent ensuite être transformées en granules et ces derniers peuvent être mis en oeuvre comprenent des lubrifiants comme l'acide stéarique, l'alcool stéarique et l'eicosanol, des colorants comprenant des colorants organiques, comme le rouge d'anthraquinone, des pigments organiques et des vernis, comme le bleu de phtalocyanine, et des pigments minéraux, comme le dioxyde de titane et le sulfure de cadmium, des charges et des diluants particulaires, comme le noir de carbone, la silice amorphe, l'amiante, les fibres de verre et le carbonate de magnésium, des plastifiants comme le phtalate de dioctyle, le phtalate de dibenzyle, le phtalate de butyl-benzyle et des huiles hydrocarbonées.

Les exemples suivants illustrent l'invention sans toutefois la limiter. Dans les exemples, les pourcentages sont exprimés en poids sauf indication contraire. PMMA signifie un polymère du méthacrylate de méthyle. Le polymère (A) est désigné comme étant le (co)polymère rigide et le polymère (B') comme le (co)polymère bicouche de l'invention.

### Exemple 1 :

Préparation d'un élément (B') de l'invention (PMMA bicouche ; coeur réticulé (B) - coquille non réticulée (C))

Dans un réacteur de 1,5 l, muni d'une agitation mécanique centrale, d'une arrivée d'azote, d'un réfrigérant à eau, et chauffé par l'intermédiaire d'un bain-marie, on introduit :
- 840 g d'eau distillée ;
- 4,8 g d'acide laurique ;
- 1,2 g de soude ;
- 345 g de méthacrylate de méthyle ;
- 13,8 g de diméthacrylate d'éthylène glycol ;
- 1,725 g de méthacrylate d'allyle.

On chauffe à 70°C, puis on ajoute 1,38 g de persulfate de potassium (K₂S₂O₈) dissous dans 60 g d'eau. On laisse polymériser pendant 4 heures à 70°C sous reflux. On procède ensuite à une post-cuisson pour convertir les derniers pour-cent de monomères résiduels. Pour cela, on ajoute 0,345 g de K₂S₂O₈ dissous dans 30 g d'eau.

Le taux de solide du latex à ce stade du mode opératoire est d'environ 28%.

Dans une deuxième étape, on polymérise une couche de PMMA basse masse autour du coeur réticulé. Pour ce faire, on ajoute une solution de 1,2 g d'acide laurique et de 0,3 g de soude dissous dans 75 g d'eau, puis 0,36 g de K₂S₂O₈ dans 60 g d'eau.

La température est toujours maintenue à 70°C. On ajoute alors, en continu, en deux heures, à l'aide d'une pompe, un mélange de 90 g de MAM et de 0,3 g de tertiododécylmercaptan.

On obtient un latex que l'on cuit encore pendant 30 minutes. Le taux de solide final théorique est de 30 %, et celui obtenu est de 28 %. Le diamètre des particules finales à l'état de latex est d'environ 430 nm (mesure effectuée au compteur Coulter). La masse moléculaire moyenne en poids de la coquille non réticulée est d'environ 30 000.

La poudre est ensuite récupérée à partir du latex par séchage par pulvérisation.

### Exemple 2 :

Préparation d'un élément comparatif de (B') (PMMA bicouche ; coeur non réticulé - coquille non réticulée)

On procède comme à l'Exemple 1, excepté que l'on n'introduit ni le diméthacrylate d'éthylène glycol ni le méthacrylate d'allyle.

Le taux de solide final théorique est de 30 %, et celui obtenu est de 29 %. Le diamètre des particules finales à l'état de latex est d'environ 400 nm (mesure effectuée au compteur Coulter).

Les masses moléculaires moyennes en poids du coeur et de la coquille des particules sont, respectivement, de 100 000 et 30 000 environ.

### Exemple 3 :

Obtention de granulés d'un mélange d'un PMMA rigide (A) et d'un PMMA (B') bicouche par voie mécanique ; préparation de plaques par compression à partir de ces granulés ; mesure de leurs propriétés de résistance aux agents fissurants.

La poudre de PMMA bicouche (B') (obtenue à l'Exemple 1 ou à l'Exemple 2) est mélangée sur une extrudeuse RHEOCORD à deux vis, à 250°C, dans différentes proportions avec un PMMA rigide (A), à savoir le PMMA ALTUGLAS 9E® qui présente une masse moléculaire moyenne en poids de 130 000. Le mélange extrudé est ensuite granulé.

On prépare différentes plaques de 1 mm d'épaisseur à partir des granulés ainsi obtenus.

On prépare aussi des plaques de référence à partir de granulés de PMMA rigide (A) seulement (PMMA ALTUGLAS 9E®).

La fabrication de ces plaques s'effectue par moulage sous presse afin d'éviter les contraintes internes. Le moulage se fait à 200°C sous 19,62 kN (2 tonnes) de pression.

La résistance à la fissuration de ces plaques soumises à une déformation sont effectuées d'après le protocole publié dans SPE Journal, Vol 18, page 667 par R.L. Bergen (Juin 1962).

La déformation critique ε_{c} (%) quantifie la résistance à la fissuration : elle définit la déformation à partir de laquelle le matériau (plaque), immergé dans un solvant (agent fissurant), développe des craquelures ou des fissures. Plus la déformation critique est élevée, plus le matériau est résistant à l'agent fissurant.

On effectue la mesure de la déformation critique ε_{c} (%) en déformant une plaque d'un millimètre d'épaisseur sur un gabarit elliptique et en plongeant l'ensemble dans l'agent fissurant.

Les agents fissurants qui ont été utilisés ici sont soit l'isopropanol, soit l'essence 98ELF.

Pour les matériaux à base de polymère de méthacrylate de méthyle, 15 minutes sont nécessaires avant d'atteindre l'équilibre. Une simple lecture de la distance qui sépare le front de craquelure ou de fissuration d'un des bords du gabarit conduit à la valeur de ε_{c} (%). Trois essais sont nécessaires pour avoir une bonne fiabilité de la mesure.

Les résultats sont rapportés dans le Tableau 1 ci-après.

**TABLEAU 1**

| Plaques obtenues par compression: | | | | |
|---|---|---|---|---|
| **ε**_{**c**} **(%) avec** | **PMMA rigide seul (A)** | **PMMA bicouche (B') utilisé** | **PMMA rigide + 1 % PMMA bicouche B'** | **PMMA rigide + 5 % PMMA bicouche B'** |
| Isopropanol | 0,28 | de l'invention (ex1) | 0,41 | 0,43 |
| | | comparatif (ex2) | 0,28 | 0,32 |
| Essence 98 ELF | 1,07 | de l'invention (ex1) | 1,66 | 1,54 |
| | | comparatif (ex2) | 1,09 | 1,39 |

### Exemple 4 :

Préparation de plaques coulées par polymérisation du méthacrylate de méthyle en présence de poudre de PMMA bicouche ; mesure de leurs propriétés de résistance aux agents fissurants.

On fabrique des plaques de 1 mm d'épaisseur en PMMA rigide A (essai de référence) et en PMMA rigide (A) modifié par du PMMA bicouche B' obtenu à l'exemple 1 (selon l'invention) et à l'exemple 2 (essai comparatif) en procédant comme suit :

Dans un moule constitué de deux plaques de verre parallèles séparées par un jonc périphérique en polychlorure de vinyle, on coule du méthacrylate de méthyle (MAM) (essai de référence) ou du MAM dans lequel on a dispersé la poudre de PMMA bicouche obtenue à l'exemple 1 (invention) ou à l'exemple 2, (c'est-à-dire sans agent de réticulation et sans agent de greffage - comparatif). Les compositions MAM ou MAM + PMMA bicouche contiennent en outre 450 ppm d'azobisisobutyronitrile comme amorceur de polymérisation et 0,3 % en poids de t-dodécyl-mercaptan pour obtenir une masse moléculaire moyenne en poids de la matière polymère thermoplastique rigide A de l'ordre de 130 000.

La polymérisation des plaques est réalisée dans une étuve ventilée et chauffée à une température de 65°C pendant 4 heures, puis à une température de 115°C pendant 2 heures.

Ensuite, on retire le moule de l'étuve et on démoule la plaque.

Sur chacune des plaques, on conduit des mesures de résistance à la fissuration comme décrit à l'Exemple 3.

Les résultats sont rapportés dans le Tableau 2 ci-après.

**TABLEAU 2**

| Plaques coulées | | | | | | |
|---|---|---|---|---|---|---|
| **ε**_{**c**} **(%) avec** | **PMMA rigide seul (A)** | **PMMA bicouche (B') utilisé** | **PMMA rigide + 0,5 % PMMA bicouche** | **PMMA rigide + 1 % PMMA bicouche** | **PMMA rigide + 5 % PMMA bicouche** | **PMMA rigide + 10% PMMA bicouche** |
| Isopropanol | 0,28 | de l'invention (ex1) | 0,52 | 0,69 | 0,97 | 1,18 |
| | | comparatif (ex2) | 0,46 | 0,46 | 0,49 | 0,50 |
| Essence 98 ELF | 1,07 | de l'invention (ex1) | 1,61 | 1,92 | 2,11 | 2,52 |

### Exemple 5 :

Préparation d'un élément B' de l'invention (PMMA bicouche ; coeur réticulé - coquille non réticulée).

Dans un réacteur de 20 l muni d'une agitation mécanique centrale, d'une arrivée d'azote, d'un réfrigérant à eau, et chauffé par une double enveloppe, on introduit :
- 2 000 g d'eau distillée ;
- 55,35 g de lauryl sulfate de sodium (sous forme d'une solution à 10 %),
- 3 531 g de méthacrylate de méthyle ;
- 141, 23 g de diméthacrylate d'éthylène glycol ;
- 17,7 g de méthacrylate d'allyle.

On chauffe à 70°C, puis on ajoute en 5 min. 14,12 g de persulfate de potassium (K₂S₂O₈) dissous dans 85,88 g d'eau. On laisse la réaction de polymérisation s'effectuer pendant 3 heures et on procède ensuite à une post-cuisson pour convertir les derniers pour-cent de monomères résiduels (30 minutes). Pour cela, on ajoute 3,58 g de K₂S₂O₈ dissous dans 100 g d'eau.

Le taux de solide du latex à ce stade du mode opératoire est d'environ 29,4 %.

Dans une deuxième étape, on polymérise une couche de PMMA basse masse autour du coeur réticulé. Pour ce faire, on ajoute une solution de 9,21 g de lauryl sulfate de sodium dans 776 g d'eau, puis 3,68 g de K₂S₂O₈ dans 97 g d'eau.

La température est toujours maintenue à 70°C. On ajoute alors, en continu, en deux heures, à l'aide d'une pompe, un mélange de 921 g de MAM et de 3,07 g de tertiododécylmercaptan.

On obtient un latex que l'on cuit encore pendant 30 minutes. Le taux de solide final théorique est de 31,3 % et celui obtenu est de 31,1 %. Le diamètre des particules finales à l'état de latex est d'environ 75 nm (mesure effectuée au compteur Coulter). La masse moléculaire moyenne en poids est d'environ 32 000.

La poudre est ensuite récupérée à partir du latex par séchage par pulvérisation.

### Exemple 6 :

Obtention de granulés d'un mélange d'un PMMA rigide (A) et d'un PMMA (B') bicouche par voie mécanique ; préparation de plaques par compression à partir de ces granulés ; mesure de leurs propriétés de résistance aux agents fissurants.

La poudre de PMMA bicouche (B') obtenue à l'Exemple 5 est mélangée sur une extrudeuse RHEOCORD à deux vis, à 250°C, dans différentes proportions avec un PMMA rigide (A), à savoir le PMMA OROGLAS V825T d'ATOHAAS, qui présente une masse moléculaire moyenne en poids de 90 000 environ. Le mélange extrudé est ensuite granulé.

On prépare, comme à l'Exemple 3, des plaques de 1 mm d'épaisseur à partir des granulés ainsi obtenus.

On prépare aussi, dans les mêmes conditions, des plaques de référence à partir de granulés de PMMA OROGLAS V825T (polymère rigide A).

La résistance à la fissuration de ces plaques est mesurée comme indiqué à l'Exemple 3. Les agents fissurants sont l'isopropanol, un mélange 70/30 en volume d'isopropanol et d'eau et l'éthanol.

Les résultats sont indiqués au tableau 3.

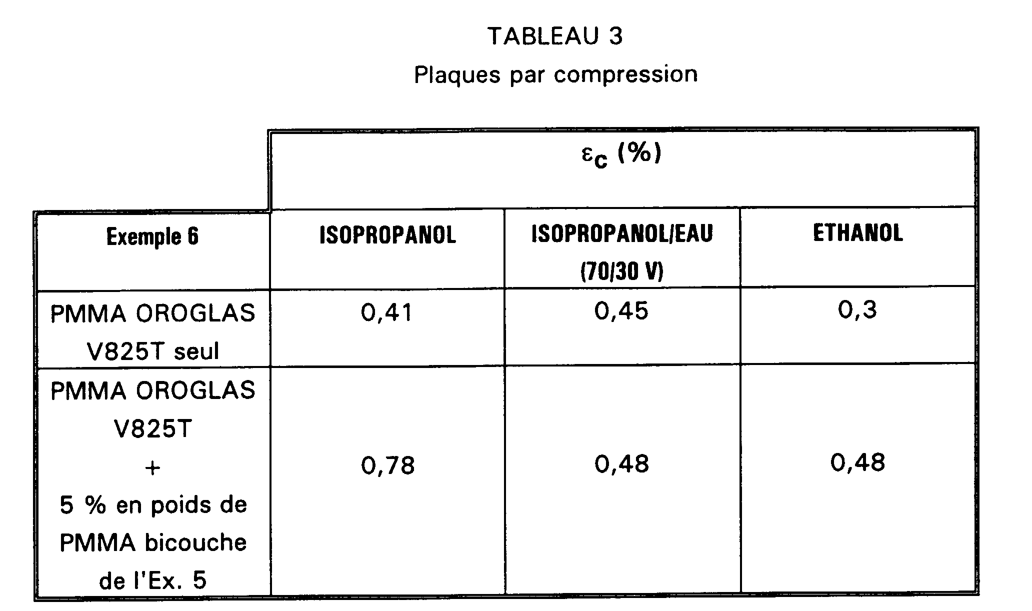

On peut noter, en particulier, que, avec seulement 5 % en poids d'additif bicouche (B'), la résistance au solvant (isopropanol) est très améliorée.

### Exemple 7 :

On prépare, comme à l'Exemple 4, des plaques coulées par polymérisation de MAM dans lequel on a dispersé la poudre de PMMA bicouche selon l'invention obtenue à l'exemple 5. Le PMMA rigide A servant de matrice à une masse moléculaire moyenne en poids d'environ 130 000.

On prépare aussi, dans les mêmes conditions, des plaques coulées de référence (PMMA rigide A seul) de masse moléculaire moyenne en poids de l'ordre de 130 000.

Les résultats des mesures de résistance à la fissuration sont indiqués au tableau 4.

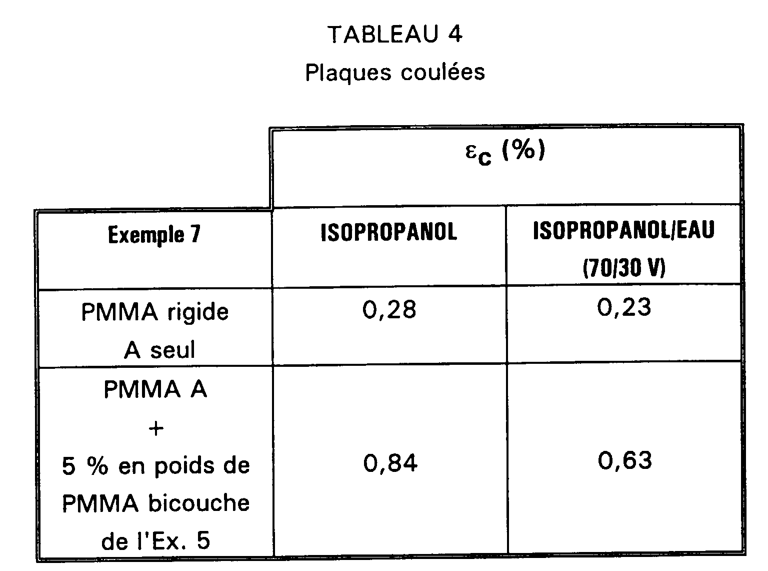

On peut noter que les plaques, obtenues selon l'invention, qu'elles soient coulées ou obtenues par compression, présentent une résistance à la fissuration nettement améliorée par rapport à celle des plaques de référence formées de PMMA seul (PMMA de référence), même avec une quantité faible de polymère bicouche (B').

### Exemple 8 - comparatif

### a) Préparation d'un élément (B') bicouche

On opère comme à l'Exemple 5, mais la polymérisation du coeur a lieu sans agent de réticulation. Le mélange réactionnel contient 4,5 % en poids (par rapport au monomère méthacrylate de méthyle) d'agent de greffage, le méthacrylate d'allyle.

Cet exemple sert à comparer des granulés préparés en présence d'agent de réticulation et d'agent de greffage (selon l'invention) avec ceux préparés avec un agent de greffage seul (utilisé en quantité analogue à celle de la totalité de l'agent de réticulation et de l'agent de greffage selon l'invention).

### b) Préparation de plaques par compression

On prépare des plaques comme indiqué à l'Exemple 6, à partir d'un mélange de granulés (5 % en poids) préparés précédemment (Ex. 8a) et 95 % en poids de PMMA OROGLAS V825T (polymère rigide A).

Les résultats des mesures de la résistance à la fissuration sont les suivants :

**TABLEAU 5**

| **ε**_{**c**} **(%)** | **ISOPROPANOL** |
|---|---|
| PMMA OROGLAS V825T | 0,41 |
| PMMA OROGLAS V825T + 5 % PMMA bicouche de l'Ex. 8a | 0,52 |

Si l'on compare les résultats des exemples 6 et 8, on peut noter que la résistance à la fissuration est meilleure lorsque les plaques sont préparées à partir d'une composition selon l'invention, c'est-à-dire contenant un (co)polymère réticulé préparé en présence d'un agent de réticulation et d'un agent de greffage.

## Revendications

1. Articles façonnés présentant une résistance améliorée aux agents fissurants, obtenus à partir d'une composition thermoplastique comprenant :
a) 50 à 99,9 % en poids d'au moins un (co)polymère thermoplastique rigide (A) à base majoritaire de méthacrylate de méthyle et, éventuellement, d'au moins un monomère à insaturation éthylénique copolymérisable avec le méthacrylate de méthyle, et
b) 50 à 0,1 % en poids d'au moins un (co)polymère réticulé (B) obtenu par polymérisation en émulsion d'une quantité majoritaire de méthacrylate de méthyle et, éventuellement, d'un monomère à insaturation éthylénique copolymérisable avec le méthacrylate de méthyle, et en présence d'au moins un agent de réticulation et d'au moins un agent de greffage,
et/ou d'au moins un polymère méthacrylique bicouche (B') constitué par ledit (co)polymère réticulé (B) associé à un (co)polymère non réticulé (C) à base majoritaire de méthacrylate de méthyle et, éventuellement, d'au moins un monomère à insaturation éthylénique copolymérisable avec le méthacrylate de méthyle, ce (co)polymère non réticulé (C) étant polymérisé en présence du (co)polymère réticulé (B).

2. Articles façonnés selon la revendication 1, caractérisés en ce que le rapport en poids du (co)polymère réticulé (B) au (co)polymère non réticulé (C) est compris entre 100:0 et 20:80, particulièrement entre 100:0 et 50:50.

3. Articles façonnés selon l'une des revendications 1 ou 2, dans lesquels le ou les monomère(s) à insaturation éthylénique copolymérisable(s) avec le méthacrylate de méthyle est (sont) choisi(s) parmi les acrylates d'alkyle en C₁-C₈, le styrène, les styrènes substitués, l'acrylonitrile, le méthacrylonitrile, les méthacrylates d'alkyle en C₂-C₈, les acrylates et méthacrylates d'hydroxyalkyle inférieur, les acrylates d'alcoxy inférieur, l'acrylate de cyanéthyle, l'acrylamide, l'acide acrylique et l'acide méthacrylique et les maléimides.

4. Articles façonnés selon l'une des revendications 1 à 3, dans lesquels le polymère thermoplastique rigide (A) est constitué par un homopolymère de méthacrylate de méthyle.

5. Articles façonnés selon l'une des revendications 1 à 3, dans lesquels le polymère thermoplastique rigide (A) est constitué par un copolymère de méthacrylate de méthyle et d'au moins un monomère copolymérisable à insaturation éthylénique, et comprend au moins 75 % en poids de méthacrylate de méthyle.

6. Articles façonnés selon l'une des revendications 1 à 5, dans lesquels le polymère thermoplastique rigide (A) est constitué par un (co)polymère méthacrylique choc ou du polyméthacrylate de méthyle syndiotactique.

7. Articles façonnés selon l'une des revendications 1 à 3 dans lesquels le (co)polymère réticulé (B) comprend, en poids, de 50 % à 100 % de méthacrylate de méthyle et de 0 à 50 % d'au moins un monomère à insaturation éthylénique copolymérisable avec le méthacrylate de méthyle et, par rapport à la totalité du monomère méthacrylate de méthyle et des comonomère(s) à insaturation éthylénique, de 0,1 % à 10 % en poids d'au moins un monomère de réticulation et de 0,1 à 10 % en poids d'au moins un monomère de greffage.

8. Articles façonnés selon l'une quelconque des revendications 1à 3 et 7, dans lesquels le ou les monomères de réticulation entrant dans la constitution du ou des (co)polymères réticulés (B) sont choisis parmi les polyméthacrylates et polyacrylates de polyols, les polyvinylbenzènes, l'acrylate et le méthacrylate de vinyle.

9. Articles façonnés selon l'une quelconque des revendications 1à 3 et 7, dans lesquels le ou les monomères de greffage entrant dans la constitution du ou des (co)polymères réticulés (B) sont choisis parmi les esters copolymérisables d'allyle, de méthallyle ou de crotyle d'acides ou diacides carboxyliques à insaturation, α, β ; l'éther d'allyle et de vinyle, l'éther de méthallyle et de vinyle et l'éther de crotyle et de vinyle ; le thioéther d'allyle et de vinyle, le thioéther de méthallyle et de vinyle et le thioéther de crotyle et de vinyle ; le N-allyl-, le méthallyl- ou le crotyl-maléimide ; les esters vinyliques de l'acide 3-buténoïque et de l'acide 4-penténoïque ; le cyanurate de triallyle ; les esters cycloalcényliques de l'acide acrylique, de l'acide méthacrylique, de l'acide maléique, de l'acide fumarique, de l'acide itaconique ; les esters bicyclo-(2,2,1)-hept-5-ène-2-yliques de l'acide acrylique, de l'acide méthacrylique, de l'acide maléique, de l'acide fumarique et de l'acide itaconique ; les éthers vinyliques et les thio-éthers vinyliques des cycloalcénols et des cycloalcène-thiols ; et les esters vinyliques des acides cycloalcène-carboxyliques.

10. Articles façonnés selon l'une des revendications 1 à 3, dans lesquels le (co)polymère non réticulé (C) comprend, en poids, de 75 à 100 % de méthacrylate de méthyle et de 0 à 25 % d'au moins un monomère à insaturation éthylénique.

11. Articles façonnés selon la revendication 10 dans lesquels le (co)polymère non réticulé (C) comporte de 0 à 5 % en poids, par rapport aux monomères méthacrylate de méthyle et comonomères, d'au moins un agent de transfert de chaîne.

12. Articles façonnés selon la revendication 11, dans lesquels le ou les agents de transfert sont choisis parmi les mercaptans, les polymercaptans, les composés polyhalogénés, les monoterpènes, les diterpènes mono-insaturés et l'acide thioglycolique.

13. Articles façonnés selon la revendication 1, dans lesquels le (co)polymère non réticulé (C) a une masse moléculaire moyenne en poids comprise entre 20 000 et 300 000.

14. Articles façonnés selon l'une quelconque des revendications 1 à 13, dans lesquels le diamètre moyen des particules du polymère (B) ou (B'), à l'état de latex est compris entre 50 nm et 1 000 nm.

15. Articles façonnés selon l'une quelconque des revendications 1 à 14, comprenant en poids, de 70 à 99 % de (A) et de 1 à 30 % de (B) ou (B') et, particulièrement de 90 à 99,5 % de (A) et de 0,5 % à 10 % de (B) ou (B').
